# EUROPEAN PATENT SPECIFICATION

(11) **EP 1 008 306 B1**
(45) Date of publication and mention of the grant of the patent: **28.07.2004**
(21) Application number: 99309906.8
(22) Date of filing: 09.12.1999
(51) Int. Cl.: A23L 1/0526, A23L 1/0522, A23L 1/308, A23L 2/39, A23L 2/52, A61K 35/78

(54) **Polysaccharide which can reduce viscosity resulting from psyllium, and foods containing the polysaccharide and psyllium**
Polysaccharid zur Verminderung der psylliuminduzierten Viskosität, und Nahrungsmittel enthaltend Psyllium und dieses Polysaccharid
Polysaccharide réduisant la viscosité induite par le psyllium et produits alimentaires contenant ce polysaccharide et du psyllium

(30) Priority: 10.12.1998 JP 35136398; 03.02.1999 JP 2629399; 05.10.1999 JP 28442799
(43) Date of publication of application: 14.06.2000
(73) Proprietor: NISSIN SHOKUHIN KABUSHIKI KAISHA, Osaka-shi, Osaka 532-8524 (JP)
(72) Inventor: Ueda, Kazuhiko, Yodogawa-ku, Osaka-shi, Osaka 532-8524 (JP); Akiyama, Daizaburo, Yodogawa-ku, Osaka-shi, Osaka 532-8524 (JP); Date, Katsuhiro, Yodogawa-ku, Osaka-shi, Osaka 532-8524 (JP); Nakazeko, Takuo, Yodogawa-ku, Osaka-shi, Osaka 532-8524 (JP); Kawamura, Yasumasa, Yodogawa-ku, Osaka-shi, Osaka 532-8524 (JP)
(74) Representative: West, Alan Harry

(56) References cited:
- GB-A- 890 207
- US-A- 5 073 370
- US-A- 5 338 549
- US-A- 5 523 014
- DATABASE WPI Section Ch, Week 199305 Derwent Publications Ltd., London, GB; Class A11, AN 1993-039372 XP002161469 & JP 04 363301 A (NICHIDEN KAGAKU KK), 16 December 1992 (1992-12-16)

## Description

The present invention relates to a polysaccharide which is useful as an ingredient of several kinds of foods containing psyllium which is known to result in high viscosity when incorporated into a hydrated condition. In accordance with the present invention, a polysaccharide which can reduce viscosity resulting from psyllium is provided. In addition, a food additive composition containing the polysaccharide and psyllium is provided, which can readily be incorporated into foods without a loss of beneficial effects of psyllium and without undesirable elevation of the viscosity of the foods. Further, the present invention also provides a food product characterized by its ingredients which are the psyllium viscosity-reducing polysaccharide and psyllium, and a method for manufacturing thereof characterized by its excellent handling feasibility and favorable palatability of the product.

A recent trend of western-style dietary habits in Japan results in a continuous reduction in the consumption of dietary fibers, and the current daily intake of dietary fibers is as low as about 17 g, which is far lower than the target level of 20 to 25 g prescribed by Ministry of Health and Welfare in Japan. In response to the progress of physiological studies on the actions of dietary fibers in a human body, the importance of the dietary fiber in health care and disease control has been well recognized. Accordingly, various attempts are made to incorporate a dietary fiber into various foods for the purpose of increasing the intake of the dietary fibers which otherwise tends to be deficient.

We focused on psyllium, among dietary fibers, which was reported to have excellent water-retaining capability and swelling ability, as well as various physiological effects such as intestinal function-controlling effect, blood lipid- controlling effect, hyperglycemia-suppressing effect, and blood cholesterol-reducing effect, and which is hardly digested and has low calories but allows to have a sense of satiety, whereby being expected to have a weight controlling effect.

Psyllium is a naturally occurring vegetable gum derived from a seed of a plant of *Plantago* species, such as *Plantago Ovata Forskal,* which is a kind of plantains cultivated in Rajasthan and Gujarat states in India. Psyllium forms a highly viscous dispersion when hydrated, and it may form a dispersion having the viscosity as high as about 4000 cp (centipoise, determined using a type B viscometer with Rotor No. 3, at 30 rpm and 25° C) for example, even when added at a concentration as low as 1 % by weight. When it is hydrated at 2% by weight, it usually forms a gelatin-like clear gel. When a 1% dispersion is heated to 90° C and then cooled, a hard gel mass may be formed. The viscosity, which is exhibited as described above, is several or several ten times greater when compared with other thickening polysaccharides, added at the same concentration, such as guar gum, locust bean gum and tara gum. In addition, although any of these thickening polysaccharides shows fluidity even when high viscosity was resulted, psyllium exhibits both of high viscosity and high gelling ability.

Accordingly, when psyllium is incorporated into food products such as beverages, confectioneries, breads and noodles in an attempt to obtain the physiological effects such as the intestine function-controlling effect as described above, the psyllium may be swollen during the manufacturing process later than the step of mixing with water due to the physical characteristics described above, thereby resulting in high viscosity. As a result, the problems such as difficulties in processing and adverse effects on palatability are experienced, and the application to the field of a food processing industry has been hampered. Therefore, a technique to suppress the onset of the elevated viscosity and gel-forming characteristics in response to the hydration of psyllium is still desired for the purpose of obtaining a better handling of psyllium to be incorporated into various food products.

Especially, when manufacturing a liquid food to be packed into a sealed container is intended, the manufacturing process requires a step of heat sterilization following the hydration step of psyllium, therefore, several problems are raised such as formation of a hard gel, leading to impossibilities in packing into a container and to a difficulties in retaining favorable fluidity or palatability.

A conventional method for suppressing the onset of the elevated viscosity resulting psyllium is shown in Japanese Patent Application Laid-Open NO. 5-15340, which disclosed a method for processing a dietary fiber psyllium in which an agar solution prepared by heating for dissolution is supplemented with psyllium powder and then solidified by cooling. In this method, although psyllium is fused by means of the coagulation action of agar whereby accomplishing the loss of the viscosity, the coagulated psyllium and agar should be used together actually as a pulverized solid, and thus the reduction in the gelling ability of the psyllium alone in a hydration system is not any how achieved. In addition, because of the usable form as a pulverized solid including agar, the scope of the applicable food products is obliged to be limited.

A number of other patent publications describe the use of psyllium in food and drink preparations. US Patent 5,073,370, for example, describes an all-natural, low calorie, high natural fibre laxative containing psyllium husks, apple fibre, fructose, gum arabic and flavourants which is in the form of a dry powder to be mixed with water for ingestion; and US Patent 5,338,549 describes a powered drink mix composition containing psyllium husks, a carrier material selected from various saccharides, and a minor amount of a free radical-scavenging anti-oxidant, mixable with water to form a liquid laxative.

In contrast, US Patent 5,523,014 describes a procedure whereby an originally viscous, non-flowable and non-pumpable cleaning composition including an oil phase incorporating a soap surfactant and a water phase, is rendered less viscous, flowable and pumpable by addition of a thickening agent, one exemplified thickening agent being a combination of psyllium and hydroxypropyl guar.

The present invention seeks to provide a procedure for suppressing the onset of the elevated viscosity and gel-forming characteristics (herein referred to simply as "viscosity") resulting from psyllium in response to the hydration thereof without deteriorating the physiological effects associated naturally with psyllium, such as intestinal function-controlling effects.

The invention is based on the unexpected discovery that when certain polysaccharides such as a specified starch is present in a hydration system of psyllium, the onset of elevated viscosity in psyllium hydrate can be significantly suppressed.

In accordance with the invention, therefore, there is provided the use of a polysaccharide for reducing the viscosity resulting from psyllium, the polysaccharide having a molecular weight of 20,000 or more and a viscosity in 2% by weight aqueous solution of 9.0 cp or less (determined using a type B viscometer with Rotor No. 1, at 60 rpm and 25° C).

Thus, an aspect of the present invention is to provide a polysaccharide for reducing the viscosity resulting from psyllium (i.e., "a psyllium viscosity-reducing polysaccharide") having a molecular weight of 20,000 or greater and viscosity of an aqueous solution at 2% by weight of 9.0 cp or less (determined using a type B viscometer with Rotor No. 1, at 60 rpm and 25° C). A polysaccharide having these characteristics can reduce the viscosity in a psyllium hydrate system without deteriorating any useful physiological property possessed naturally by psyllium and without causing any interference in the manufacturing process or any adverse effect on the palatability when incorporated into a water containing food.

The psyllium viscosity-reducing polysaccharide according to the present invention may be preferably granulated to impart a desirable psyllium viscosity-reducing ability. Such polysaccharides can efficiently prolong the onset of the elevated viscosity upon hydration of psyllium, thus it is advantageously used for the manufacture of the powdered food for preparing the liquid food such as powdered juice mix or powdered instant soup mix, namely the food products which should be prepared by dissolving in water, or in hot or boiling water prior to drinking/eating them. It is preferable that the polysaccharide is granulated to yield 70% by weight or more of the particles being unable to pass through the 140 mesh sieve (140 mesh on), thereby the desirable psyllium viscosity-reducing effect, handling feasibility and solubility of the food product, as well as preferable dispersion property and bulk density may be achieved.

In the first aspect of the present invention as above-described, the psyllium viscosity-reducing polysaccharide may be preferably one selected from the group consisting of a modified starch, gum arabic, arabinogalactan, partially decomposed guar gum, pullulan, a dietary fiber as well as combinations thereof, due to the excellent psyllium viscosity-reducing ability thereof.

In particular, the method for the modification to obtain the modified starch may for example be one or more of oxidation, etherification, esterification and gelatinization.

The polysaccharide particularly preferred in the present invention is selected from the group consisting of oxidized tapioca starch, oxidized potato starch, acid-treated gelatinized potato starch, waxy cornstarch octenyl succinate, acid-treated hydroxypropyl etherified tapioca starch as well as combinations thereof.

Another aspect of the invention is to provide a food additive composition containing psyllium, and the psyllium viscosity-reducing polysaccharide. Since this food additive composition contains psyllium together with the polysaccharide described above, it can readily be incorporated into a food product, especially to a liquid food manufactured in a water-based system, or a food whose manufacturing process involves heating in a hydrated condition. Since the psyllium thus incorporated retains its beneficial physiological effect, it provides a desirable effect to a consumer of the food comprising the composition.

The invention also provides a food product characterized by its ingredients, namely psyllium and the psyllium viscosity-reducing polysaccharide. Such food product may be preferably a food whose starting material itself contains water, a food prepared by adding water during its manufacturing process, or a food intended to be prepared or cooked with adding water just before eating, such as noodles, confectioneries, cereals, iced confectioneries, breads, chilled confectioneries, soups, processed seafoods, processed meats, beverages and dairy foods.

Moreover, another object of the present invention is to provide a liquid food comprising psyllium, and the polysaccharide for reducing the viscosity resulting from the psyllium wherein the polysaccharide having a molecular weight of 20,000 or greater and viscosity of an aqueous solution at 2% by weight of 9.0 cp or less (determined using a type B viscometer with Rotor No. 1, at 60 rpm and 25° C), being selected from a group of modified starches consisting of etherified starch, esterified starch, and any combination thereof.

In this aspect of the invention, the onset of the elevated viscosity/gel formation in a psyllium hydrate can be suppressed and a reduction in the viscosity/gelling ability can be achieved even if the method includes a step of heating, besides the physiological effects associated naturally with psyllium such as intestinal function-controlling effect may not be deteriorated. A prominent suppressive effect on the onset of the elevated viscosity/gel formation in a psyllium hydrate can be achieved using the specified polysaccharide as described above (molecular weight: 20,000 or greater; and the viscosity of an aqueous solution at 2% by weight: 9.0 cp or less (determined using a type B viscometer with Rotor No. 1, at 60 rpm and 25°C)), however, some of the candidate polysaccharides may not be often practical because another problems to be solved was raised when the hydration system comprising the polysaccharide and psyllium was heated. Namely, when the hydration system containing such polysaccharide having low viscosity was heated for the purpose of sterilizing it, gel formation was initiated, then the gel body was separated from the aqueous phase. The gel developed in such a manner could not be well broken to be dispersed as a homogenous liquid, even if it was crushed well using a food mill or the like.

The modified starch may be preferably selected from the group consisting of acid-treated hydroxypropyl etherified tapioca starch, waxy cornstarch octenyl succinate and a combination thereof, which exert desirable effects to suppress the onset of the viscosity/gel formation, besides, they can suppress the remarkable onset of the elevated viscosity upon heating resulting from psyllium, and can significantly reduce gel strength.

As another aspect of the invention, a method for manufacturing a liquid food is provided, comprising the steps of: (a) preparing an aqueous solution comprising psyllium and at least one modified starch selected from the group consisting of etherified starch, esterified starch, and any combination thereof, said modified starch has a molecular weight of 20,000 or greater and has viscosity of an aqueous solution at 2.0% by weight of 9.0 cp or less (determined using a type B viscometer with Rotor No. 1, at 60 rpm and 25°C), (b) packing the solution into a container followed by sealing; and (c) sterilizing the solution by heating any time of before, during or after the step (b) is conducted. In this method for manufacturing a liquid food, psyllium may be preferably added after the dissolution of the modified starch during the step (a), thereby more efficient prevention of the onset of elevated viscosity/gel formation upon the addition followed by heating of the psyllium may be accomplished. Moreover, it is preferable in this method to select the modified starch from the group consisting of acid-treated hydroxypropyl etherified tapioca starch, waxy cornstarch octenyl succinate and a combination thereof, because a liquid food comprising psyllium may be provided, which has less viscosity and gel strength while the physiologically beneficial effects associated naturally with psyllium such as intestinal function-controlling effect may be preserved, even if heat sterilization is conducted after preparing the solution which contains psyllium. Thus, in accordance with this aspect of the invention, manufacturing a liquid food which comprises psyllium is enabled, of which feasibility in handling and palatability in drinking are both excellent.

Furthermore, another aspect of the present invention is to provide a powdered food for preparing a liquid food comprising psyllium, and a psyllium viscosity-reducing polysaccharide, wherein the polysaccharide is granulated, while having a molecular weight of 20,000 or greater and the viscosity of an aqueous solution at 2% by weight of 9.0 cp or less (determined using a type B viscometer with Rotor No. 1, at 60 rpm and 25° C). Because the polysaccharide having such characteristics can exert an efficient psyllium viscosity-reducing effect, it can be readily added to the psyllium containing food products such as a powdered food for preparing a liquid food (e.g., powdered juice mix or powdered instant soup mix) which should be prepared in a water containing system, and the food products which comprise water such as jelly or liquid beverage, while the physiologically advantageous effects of the psyllium may be preserved after preparing the food products, thus beneficial virtues will be imparted to the consumers of these food products.

Fig. 1 illustrates a graph showing the particle size distribution of the ungranulated polysaccharides.

Fig. 2 illustrates a graph showing the particle size distribution of the polysaccharides as in Fig. 1, which were granulated in accordance with one embodiment of the present invention.

Fig. 3 illustrates a graph showing time dependent alteration of the viscosity of the aqueous solution comprising the psyllium composition containing each of the polysaccharides shown in Figs. 1 and 2, or an aqueous solution of psyllium.

Fig. 4 illustrates a graph showing time dependent alteration of the viscosity of the aqueous solution comprising the psyllium composition containing each of the polysaccharides granulated or ungranulated, and the granulated polysaccharides including particular fractions having the specified particle size.

Fig. 5 illustrates a graph showing time dependent alteration of the viscosity of an aqueous solution of powdered juice mix in accordance with another embodiment of the present invention, following dissolution into water.

Fig. 6 illustrates a graph showing time dependent alteration of the viscosity of an aqueous solution of powdered instant soup mix in accordance with further embodiment of the present invention, following dissolution into hot water.

The embodiments of the present invention are described below.

A psyllium in the invention may be a polysaccharide derived from the hull of a seed of *Plantago ovata* which is a plant of *Plantago* species, and includes commercially available psyllium and psyllium seed gum. Such psyllium is not particularly limited in respect to its purification method or particle size.

The term "viscosity-reducing" means any alteration to impart both of the lower viscosity and gel strength than those possessed naturally by a psyllium hydrate.

### 1. Characterization of psyllium viscosity-reducing polysaccharide

As described above, a viscosity-reducing polysaccharide according to the invention has a molecular weight of 20,000 or greater and the viscosity of an aqueous solution at 2% by weight of 9.0 cp or less when determined using a type B viscometer with Rotor No. 1 at 60 rpm and 25°C. Two or more polysaccharides having these characteristics may be used in combination. The molecular weight herein is calculated based on the calibration curve obtained by a gel filtration chromatography with a standard substance on a gel filtration column (for example, TSKgel TOYOPEARL manufactured by TOSO).

The source of a polysaccharide according to the invention may not be particularly limited, and may include, in addition to the modified starch described below, gum arabic, arabinogalactan, dietary fibers such as those derived from soybean, pullulan and mixtures thereof (See Example 2).

The sources of the modified starch may include for example, tapioca starch, potato starch, cornstarch, rice starch, wheat starch and the like.

The method for modification of the starch to obtain the modified starch may be one of the followings:
(1) Oxidation using sodium hypochlorite or equivalent reagents;
(2) Etherification such as hydroxypropyl etherification and carboxymethyl etherification;
(3) Derivatization into esters such as acetates, octenyl succinates and phosphates;
   and,
(4) Gelatinization; as well as a combination of two or more of those listed.

Among the modified starches produced as above, those preferred particularly due to their excellent psyllium viscosity-reducing effect may include oxidized tapioca starch, oxidized potato starch, acid-treated gelatinized potato starch, waxy cornstarch octenyl succinate and acid-treated hydroxypropyl etherified tapioca starch (See Example 1). Among these modified starches, acid-treated hydroxypropyl etherified tapioca starch is especially preferred because of its heat resistant property. Accordingly, this starch may be useful in preparing a food product since it retains a striking psyllium viscosity-reducing effect even after a high temperature treatment such as heat sterilization is carried out (See Example 5).

It is a matter of course that the physiological activity possessed naturally by psyllium should be preserved even after the viscosity is reduced by the addition of the polysaccharide mentioned above, and it was demonstrated by determining the water-retaining capacity in biological digestion model *in vitro* that about 70 % or higher of the original water-retaining capacity was preserved following the reduction of the viscosity according to the present invention (See Example 6).

Further, for the purpose of manufacturing the liquid food, the modified starch may be preferably selected form the group consisting of acid-treated hydroxypropyl etherified tapioca starch, waxy cornstarch octenyl succinate and a combination thereof. These modified starches may allow providing a liquid food comprising psyllium which has less viscosity and gel strength, while the physiological effects associated naturally with psyllium such as intestinal function-controlling effect are preserved even if heat sterilization is conducted after preparing the solution which contains psyllium. In addition to the modified starch described above, dextrin of which DE (Dextrose Equivalent) is 16 or lower may be preferably added because further improvement of the palatability of the liquid food can be expected.

### 2. Polysaccharide content

The amount of the polysaccharide to be added relative to the amount of psyllium may vary depending upon the concentration of the psyllium and the viscosity of the polysaccharide itself. Thus, the psyllium viscosity-reducing effect of the polysaccharide according to the invention may be increased corresponding to the increase in the amount added, to a certain extent of the concentration (amount added) which may vary depending on the source and the modification of the polysaccharide employed. Nevertheless, the polysaccharide should be added in an amount which does not result in the excess viscosity over the value achieved as a result of the viscosity-reducing effect of the polysaccharide added, since the polysaccharide itself may exhibit some extent of viscosity.

For example, as shown in Example 3 described infra, when acid-treated hydroxypropyl etherified tapioca starch was used as the psyllium viscosity-reducing polysaccharide and added to a 1 or 2 % by weight aqueous solution of psyllium, the reduction in the viscosity of the psyllium was observed in the concentration range of 20 to 30 % by weight of the polysaccharide. When each of gum arabic and arabinogalactan was added to a 2 % by weight aqueous solution of psyllium, the reduction in the viscosity of the psyllium was observed at a concentration up to 2 and 3 % by weight, respectively.

### 3. Preparation of hydration system of the polysaccharide and psyllium

A significant reduction in the viscosity in a hydration system of psyllium can be achieved with the polysaccharide according to the invention as discussed above. Such hydration system means a system in which the polysaccharide and psyllium coexist in an aqueous substance as a solution or as a dispersion, and in which any other additional food materials may be optionally included. A method for producing such a hydration system is not particularly limited, and may be for example:
(1) a method in which psyllium is added to an aqueous material containing the polysaccharide;
(2) a method in which a particulate mixture of the polysaccharide and psyllium is added to an aqueous material and then dissolved;
(3) a method in which an aqueous material containing the polysaccharide is admixed with an aqueous material containing psyllium;
(4) a method in which psyllium containing fluid is admixed with the polysaccharide and dissolved (also see Example 4).

In order to obtain a solution of a water insoluble polysaccharide among those listed above, dissolution may be effected by heating, otherwise, previous gelatinization may be carried out to impart a desirable water solubility.

When the modified starch should be dissolved by heating, it is preferable to add psyllium after the solubilization of the modified starch so that the onset of the viscosity/gel formation upon the heating of psyllium may be avoided more efficiently.

### 4. Application to food additive composition

As a form of a food additive composition containing the viscosity-reducing polysaccharide and psyllium, a particulate mixture of the polysaccharide and psyllium, or a hydrate of the both components formed by the method described above in Section 3 may be employed, and the ratio of each component to be added may appropriately be determined within the range allowing the polysaccharide to exert its psyllium viscosity-reducing effect.

Using a certain polysaccharide (e.g., acid-treated hydroxypropyl etherified tapioca starch), the food additive composition described above enables to prevent the thickening/gelling by psyllium associated with a heat treatment.

### 5. Application to processed food

Since the polysaccharide according to the invention renders to reduce the thickening/gelling ability of psyllium significantly when its effect is exerted in the hydration system including the psyllium, it enables the use of psyllium particularly in a food for which the use thereof has been difficult because of its potent thickening/gelling behavior, such as a water-containing food or a food for which water should be added during its preparation process. Such foods may for example be noodles, confectioneries, breads, cereals, chilled confectioneries, iced confectioneries, soups, processed seafoods, processed meats, beverages and dairy foods.

### 6. Application to liquid food

If psyllium is incorporated at a higher amount into the food product, the amount of the viscosity-reducing polysaccharide is obliged to be increased in order to attain the desirable viscosity-reducing ability. The suitable amount of psyllium to be incorporated into the liquid food may be 5% by weight or less preferably, based on the handling feasibility, fluidity and palatability of the product. The temperature of the solution/dispersion of the viscosity-reducing polysaccharide to which psyllium is added can be of any range, however, it may be preferably between 30-80° C in view of the handling feasibility.

As further ingredients of the food product of the invention, the following additional food materials may be optionally added when manufacturing a liquid food is intended: sweeteners such as sugar, fructose and glucose; flavouring materials such as fruit juice (e.g., grape juice, apple juice), acidulants (e.g., ascorbic acid, tartaric acid, sodium citrate); and nutritional materials such as vitamins, polyphenols, oligosaccharides and minerals.

When the method for manufacturing the liquid food comprising the steps of: (a) preparing an aqueous solution comprising psyllium, and at least one modified starch selected from the group consisting of etherified starch, esterified starch, and a combination thereof; (b) packing the solution into a container followed by sealing; and (c) sterilizing the solution by heating any time of before, during or after the step (b) is conducted, the ingredients described above may be preferably added during and/or following the preparation step (a), and before the packing step (b).

### (6-b) Packing and sealing of the liquid food

The given volume of the solution comprising psyllium and viscosity-reducing polysaccharide may be charged to a container and then sealed to manufacture a liquid food product. The material, shape and structure of the container are not specifically limited as long as having a structure that can be sealed after packing, and having enough properties which serve as a barrier, while it should be resistant to the elevated inner pressure which is imparted through heating when heat sterilization must be conducted after the packing and sealing step. For example, a standing-pouch type, a gazette type, a flat pouch type, made of laminated material comprising paper and plastic film or comprising plastic film and metal foil such as alminium foil, as well as plastic container, metal can, bottle or the like may be suitably employed as the container.

### (6-c) Heat Sterilization

Heat sterilization of the solution comprising psyllium and viscosity-reducing polysaccharide may be conducted at any time of: prior to, during or following the above packing step (b). The condition for the sterilization may be suitably determined depending upon the pH of the liquid to be sterilized and the shape of the container. For example, when a liquid having pH 4 or lower is packed into a pouch type container made of alminium, the primary sterilization may be conducted prior to packing into the container, at 90° C for 2 minutes using a tubular type heat exchanger, then after the container is sealed following packing, steam sterilization may be carried out at 90° C for about 10 minutes in a sterilization steamer.

### 7. Application to powdered food for preparing liquid food

Another embodiment which relates to a powdered food for preparing a liquid food is described below in detail.

### A. Psyllium

In this embodiment, psyllium may be any of which as described above, including commercially available powdered psyllium and psyllium seed gum. The purification method as well as particle size of the psyllium are not particularly limited. In respect of the delayed onset of the elevation of the viscosity, the particles may be preferably coarse, besides, the granulated psyllium as well as the coated psyllium using hydrogenated fat/oil or zein (a kind of protein derived from corn) may be suitably employed. When psyllium is granulated, further delay of the onset of the elevated viscosity is expected by adding an organic acid such as ascorbic acid or citric acid. Preferably, the particle size of psyllium or granulated psyllium may be similar to that of the granulated polysaccharide as detailed below, in view of the possible spontaneous sorting of the powder which occurs in a time-dependent manner.

### B. Granulated polysaccharide

### (a) Particle size of the polysaccharide

The larger particle size of the granulated viscosity-reducing polysaccharide in accordance with the present invention is apt to provide a stronger psyllium viscosity-reducing effect (see Example 12). The particle size distribution of the granulated polysaccharide is not specifically limited, however, if the polysaccharide comprises 70% by weight or more of the particles being unable to pass through the 140 mesh sieve (140 mesh on), the desirable psyllium viscosity-reducing effect, handling feasibility and solubility of the food product, as well as preferable dispersion property and bulk density may be provided (see Example 12).

The method for granulation may not be limited any how, as long as granules can be yielded, thus for example, fluidized bed granulation, spray granulation, tumbling granulation, extruding granulation, agitation granulation, and disintegration granulation may be appropriately selected. Among these methods, fluidized bed granulation may be suitably employed using a fluidized bed granulator in view of a better producibility, costs for the manufacture, and a solubility of the resulting polysaccharide.

### (b) Selection of the polysaccharide

The polysaccharide which may be used in this invention is not specifically limited, except for the limitation as described above, namely having a molecular weight of 20,000 or greater and the viscosity of an aqueous solution at 2% by weight of 9.0 cp or less, preferably 5.0 cp or less when determined using a type B viscometer with Rotor No. 1 at 60 rpm and 25°C. The molecular weight herein is calculated as above described.

The source of a polysaccharide according to this invention may be those listed above in Section 1. Preferably, the polysaccharide may be gelatinized thereby leading to a suitable solubility. Among those polysaccharides, acid-treated gelatinized potato starch, waxy cornstarch octenyl succinate, acid-treated hydroxypropyl etherified tapioca starch, or any combination thereof may exert more advantageous effects.

### (c) Polysaccharide content

As described in the above section 2, the amount of the polysaccharide to be added relative to the amount of psyllium may vary depending on the concentration of the psyllium and the viscosity of the polysaccharide itself. Thus, the psyllium viscosity-reducing effect of the polysaccharide according to the invention may be increased corresponding to the increase in the amount added, to a certain extent of the concentration (amount added) which may vary depending on the source and the modification of the polysaccharide employed. For example, as shown in Example 3, when acid-treated hydroxypropyl etherified tapioca starch was used as a psyllium viscosity-reducing polysaccharide, the viscosity resulting from psyllium can be still reduced in an amount of the starch which is one-eighth by weight of psyllium. Besides, when the amount of the polysaccharide is increased to more than 30% by weight, the viscosity is apt to be elevated due to the viscosity of the polysaccharide itself. Accordingly, the amount of the polysaccharide to be added may be suitably adjusted to attain desirable viscosity resulting from psyllium.

### C. Preparation of psyllium composition, and method of manufacturing a powdered food

The psyllium composition in accordance with this invention may be prepared by mixing the powder of both of psyllium and the polysaccharide as above described in the foregoing section.

The powdered food product may be for example, powdered juice mix and powdered instant soup mix, which may be manufactured by adding powdered ingredients suitably, such as fruit juice powdered, granulated sugar, seasoning/flavouring materials and the like, ad libitum. When a starch is employed as the polysaccharide, preceding gelatinization may be preferably conducted to improve the solubility of itself. Further, psyllium may be granulated prior to mixing with or without the additional powdered ingredients, in order to avoid the formation of insoluble solid cakes.

### EXAMPLES

The present invention is further detailed in the following Examples, however such Examples are intended to be nothing more than the illustration, and should not be construed as restriction of the present invention.

In the following Examples, viscosity was determined using a type B viscometer (TOKYO KEIKI, Model B8L) at 25°C. Molecular weight was determined by subjecting a 0.2 ml sample to a gel filtration chromatography (Pharmacia Fine Chemicals, FPLC) equipped with a packed gel filtration column (*f* Ó 15 mm x 75 cm, TOSO, TSKgel, TOYOPEARL HW-65), which was eluted with purified water and detected with a differential refractometer at the flow rate of 0.8 ml/min. As a standard substance for determining the molecular weight, pullulan (WATERS Co.) was employed. In the following Examples, any % which indicates a content is % by weight.

### [Example 1: Psyllium viscosity-reducing ability of the modified starch]

Among psyllium viscosity-reducing polysaccharides according to the invention, modified starches were examined for their psyllium viscosity-reducing abilities. First, 96 g of ion exchanged water was admixed with 2 g of each of the modified starches shown in Table 1 (Samples No. 1 to 13), which was dissolved with heating and then cooled, and the viscosity was determined using Rotor No. 1 at 60 rpm. Subsequently, 2 g of the psyllium powder (Dainippon Pharmaceutical Co., Ltd., HEALTHY GUM™) was added to the aqueous solution, and the viscosity of the respective solution was determined using Rotor No. 2 at 1.5 rpm. The results are illustrated in Table 1 shown below.

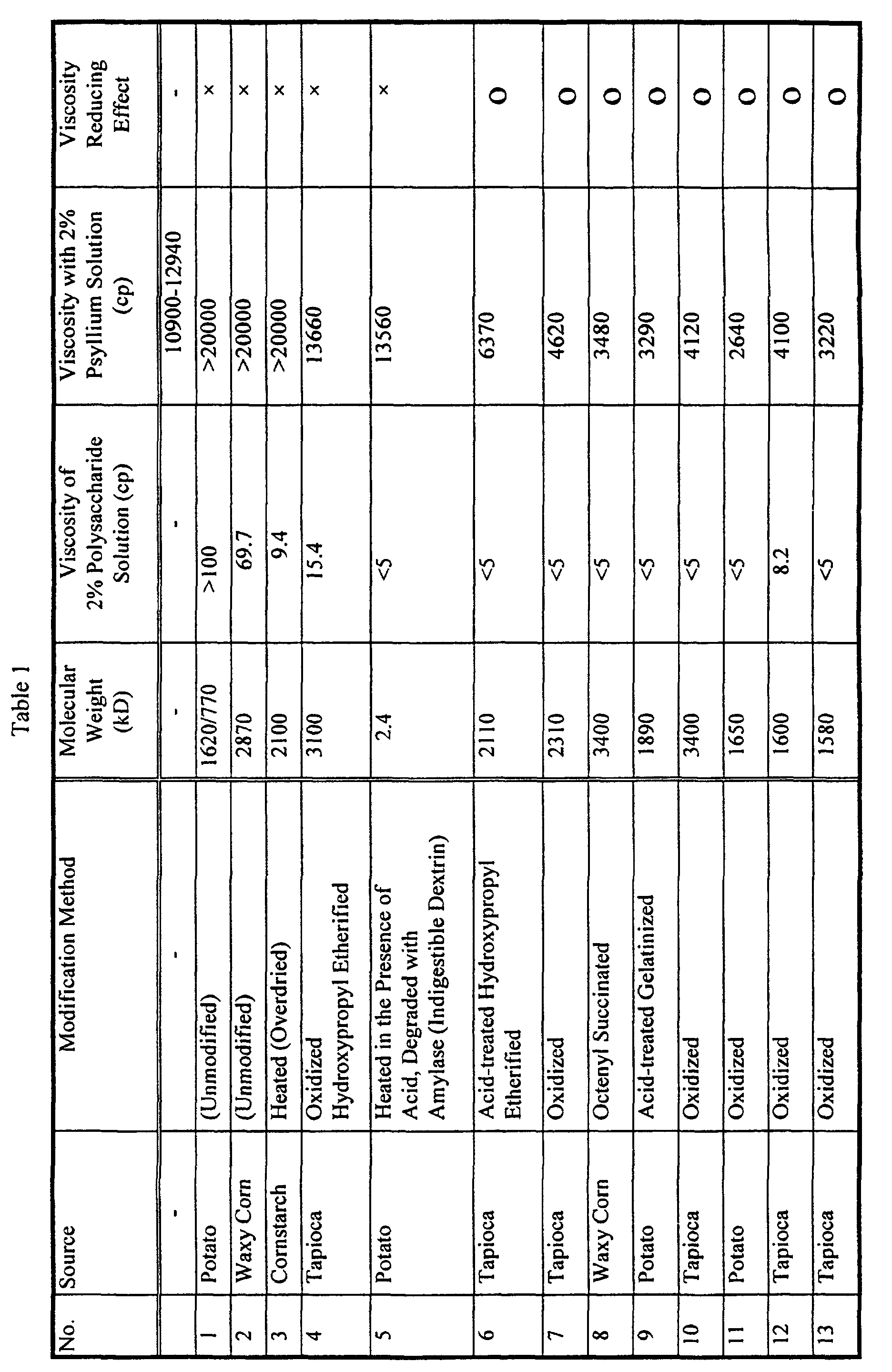

Based on the results indicated from Table 1, it was concluded as follows.
(1) There is no correlation between the psyllium viscosity-reducing ability and the source of the starch.
(2) When the concentration of the aqueous solution of the psyllium is high (Samples No. 1 and No. 2), no viscosity-reducing effect could be exerted.
(3) Each of Samples No. 6 to 13, namely, the acid-treated hydroxypropyl etherified tapioca starch, the oxidized tapioca starch, the waxy cornstarch octenyl succinate, the acid-treated gelatinized potato starch, the oxidized potato starch, exerted the psyllium viscosity (thickening/gelling)-reducing effect.

The potato starch of Sample No. 1 exhibited two peaks in the determination of the molecular weight by the gel filtration chromatography, suggesting that it was a mixture of two distinct polysaccharides.

As described above, the psyllium viscosity-reducing ability was affected by the molecular weight of the starch and the viscosity of the aqueous solution of the starch, and such ability was observed with modified starches having a molecular weight of 20,000 or greater and viscosity of an aqueous solution at 2% by weight of 9.0 cp or less (determined using a type B viscometer with Rotor No. 1, at 60 rpm and 25°C).

### [Example 2: Psyllium viscosity-reducing ability of polysaccharide other than modified starch]

Ninety six gram of ion exchanged water was admixed with 2 g of each of the polysaccharides (Samples No. 1 to 7), which was dissolved with heating, and then admixed with 2 g of psyllium similarly as in Example 1, cooled and then subjected to the determination of the viscosity. The results are shown in Table 2.

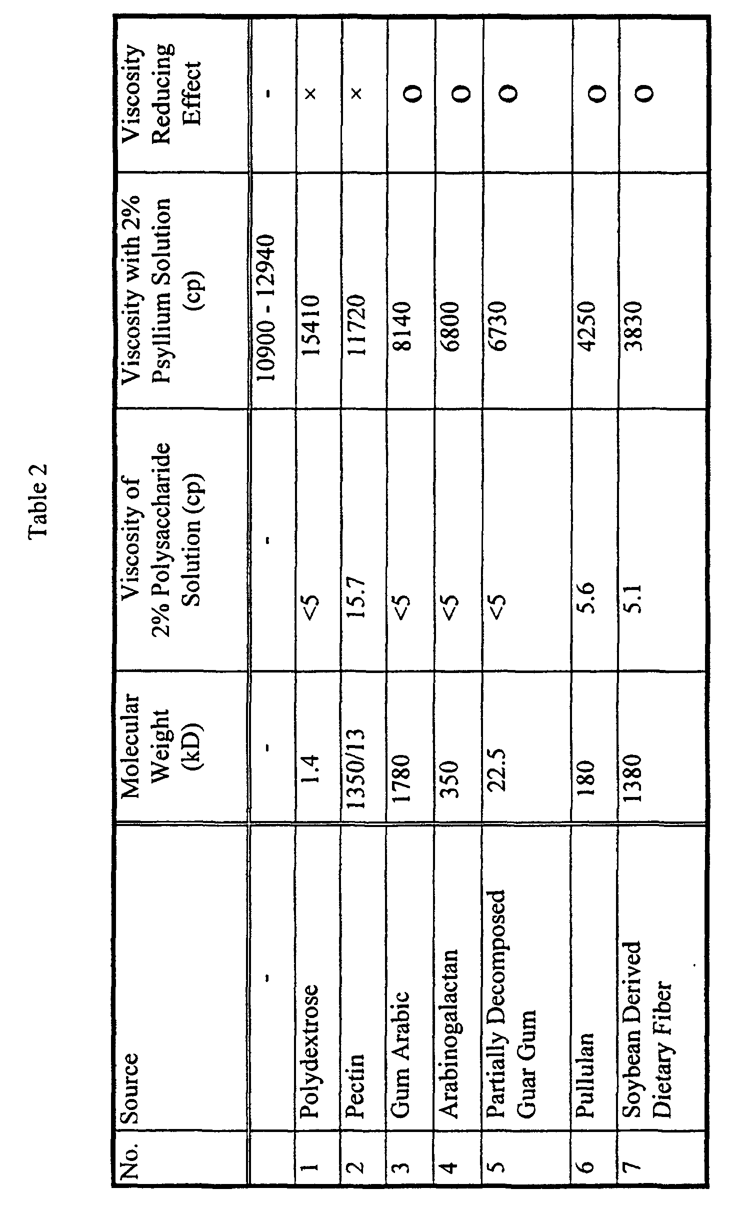

Based on the results indicated from Table 2, it was concluded as follows:
(1) Each of Samples No. 3 to 7, namely, gum arabic, arabinogalactan, partially decomposed guar gum, pullulan and the soybean-derived dietary fiber, exerted the psyllium viscosity-reducing effect.
(2) The polydextrose, i.e., Sample No. 1, had no psyllium viscosity-reducing ability. The pectin, i.e., Sample No. 2, could exert almost no psyllium viscosity-reducing effect.
(3) Similarly as in the case of the starches in Example 1, the psyllium viscosity-reducing ability of the polysaccharide was affected by the molecular weight and the viscosity of the aqueous solution of the polysaccharide, and such ability was observed with the polysaccharide having a molecular weight of 20,000 or greater and viscosity of an aqueous solution at 2% by weight of 9.0 cp or less (determined using a type B viscometer with Rotor No. 1, at 60 rpm and 25° C ).

The pectin of Sample No. 2 exhibited two peaks in the determination of the molecular weight by the gel filtration chromatography, suggesting that it was a mixture of two polysaccharides.

### [Example 3: Concentration of polysaccharide]

In order to investigate the correlation between the concentration of the polysaccharide employed and the psyllium viscosity-reducing effect, the following experiment was conducted. The aqueous solutions of acid-treated hydroxypropyl etherified tapioca starch at the concentrations of 0.25%, 0.5 %, 1 %, 2.5 %, 10 %, 20 %, 30 % and 40 % and the aqueous solutions of gum arabic or arabinogalactan at the concentrations of 0.5 %, 1 %, 2 % and 3 % were prepared respectively, and each solution was admixed with 2 % of psyllium, cooled and examined for its viscosity similarly as in Example 1. The results are indicated in Tables 3 and 4 shown below.

**Table 3**

| Acid-treated Hydroxypropyl Etherified Tapioca Starch | | |
|---|---|---|
| Polysaccharide Concentration (% by weight) | Viscosity with 2% Psyllium Solution (cp) | Viscosity with 1 % Psyllium Solution (cp) |
| 0 | 14210 | 434 |
| 0.25 | 12090 | 343 |
| 0.5 | 9900 | 336 |
| 1 | 8840 | 306 |
| 2 | 6370 | 250 |
| 5 | 4040 | 110 |
| 10 | 580 | 51 |
| 20 | 627 | 150 |
| 30 | 1970 | 744 |
| 40 | 5350 | >1000 |

**Table 4**

| | Viscosity with 2% Psyllium Solution (cp) | |
|---|---|---|
| Polysaccharide Concentration (% by weight) | Gum Arabic | Arabinogalactan |
| 0 | 14210 | 14210 |
| 0.5 | 10600 | 8050 |
| 1 | 6420 | 6860 |
| 2 | 5630 | 6370 |
| 3 | 6510 | 4990 |

Based on the results indicated from Tables 3 and 4, the following conclusions were obtained.

When the acid-treated hydroxypropyl etherified tapioca starch was combined with the 2 % psyllium solution or the 1 % psyllium solution, the concentration up to 20 % of the starch caused the reduction in the viscosity resulting from the psyllium. In addition, the 2 % psyllium solution tended to gain an elevation of the viscosity at a concentration of the starch exceeding 30 %, although some extent of viscosity-reducing effect was observed. An elevation of the viscosity of 1 % psyllium solution was observed, compared with the polysaccharide-free control when the starch was employed at a concentration exceeding 30 %. Such tendencies of elevated viscosity at higher concentration levels of the starch may be due to the viscosity of the polysaccharide itself.

In the 2 % psyllium solution, the viscosity of the psyllium solution tended to be reduced with gum arabic at 2 % or less, or with arabinogalactan at 3 % or less.

### [Example 4: Method for producing hydrate of psyllium with polysaccharide]

In this Example, acid-treated hydroxypropyl etherified tapioca starch was used as the polysaccharide (the modified starch) to form the hydration system using one of four different procedures. Water employed was ion exchanged water. The dissolution with heating and the high temperature treatment were all conducted in a boiling water bath for 10 minutes, followed by cooling to 25°C.

The following procedure was conducted to form each hydration system so that the concentrations of the polysaccharide and the psyllium after forming the hydration system became 10 % and 2 %, respectively, and the viscosity of the solution was determined using Rotor No. 2 at 30 rpm.

### <Samples>

Sample 1: Eighty eight gram of water was admixed with 10 g of the modified starch and heated to effect dissolution followed by cooling, and then admixed with 2 g of psyllium, heated, cooled and subjected to the determination of the viscosity.

Sample 2: Mixture of 10 g of the modified starch and 2 g of psyllium was added to 88 g of water, thereafter heated followed by cooling, and then subjected to the determination of the viscosity.

Sample 3: An aqueous solution of 10 g of the modified starch in 40 g of water obtained by heating to allow dissolution was admixed with the solution of 2 g of psyllium in 48 g of water also obtained by heating to allow dissolution, then heated, cooled and subjected to the determination of the viscosity.

Sample 4: Eighty eight gram of water was admixed with 2 g of psyllium and heated to effect dissolution followed by cooling, and then admixed with 10 g of the modified starch, heated, cooled and subjected to the determination of the viscosity.

The viscosity of each sample solution is illustrated in Table 5 shown below.

**Table 5**

| Sample No. | Viscosity (cp) |
|---|---|
| Control | >1000(Undetectablly Viscous) |
| 1 | 234 |
| 2 | 261 |
| 3 | 304 |
| 4 | 273 |

From these results, the acid-treated hydroxypropyl etherified tapioca starch exerted psyllium viscosity-reducing effect regardless of the order of the addition of the psyllium and the polysaccharide, and regardless of the procedure for preparing the hydration system.

### [Example 5: Heat resistance of psyllium viscosity-reducing ability]

As described above, the hydration system of psyllium has been known to attain a significant elevation of the viscosity through heating. In order to investigate how the psyllium viscosity-reducing effect of the polysaccharide is affected by heating, the following heat resistance test was conducted.

Water employed was ion exchanged water. A psyllium was used at the concentration of 2 %, and acid-treated hydroxypropyl etherified tapioca starch was employed as the polysaccharide (the modified starch) at the concentration of 10 %.
(1) When only the psyllium was dissolved in water, the viscosity of the solution was 14210 cp (determined using Rotor No. 2 at 1.5 rpm).
(2) When the psyllium and the modified starch were dissolved in water, the viscosity of the solution was 302 cp (determined using Rotor No. 2 at, 30 rpm).
(3) When the viscosity of each of the aqueous solutions (1) and (2) described above was determined after heating in a boiling water bath for 10 minutes, followed by cooling, aqueous solution (1) containing only the psyllium lead to formation of a glutinous cake-like gel with an elevation of the viscosity up to 100,000 cp or greater, while the aqueous solution (2) supplemented with the modified starch gave no elevation of the viscosity and kept the viscosity as low as 234 cp (determined using Rotor No. 2 at 30 rpm). Thus, it was evident that the addition of the polysaccharide enables the psyllium viscosity-reducing ability to be heat resistant.

### [Example 6: Effect of addition of polysaccharide on water-retaining capacity of psyllium]

A polysaccharide according to the invention was added to the psyllium hydration system resulting in the reduced viscosity (thickening/gelling), and then the water-retaining capacity of the psyllium hydration system was determined. Various physiological effects exerted by psyllium such as an intestinal function-controlling effect is considered to be due to the water-retaining capacity of the psyllium, therefore, the water-retaining capacity in the hydration system was determined to ensure that the physiological effects of the psyllium were still preserved even after the addition of the polysaccharide according to the invention. A biological digestion model was employed in the determination procedure assuming the digestion in a stomach and a small intestine.

### <Samples>

Control: 2 g of psyllium;
Sample 1: 2 g of psyllium with polysaccharides (10 g of acid-treated hydroxypropyl etherified tapioca starch and 0.5 g of gum arabic);
Sample 2: 2 g of psyllium with polysaccharides (6 g of acid-treated hydroxypropyl etherified tapioca starch and 0.5 g of gum arabic); and
Sample 3: 2 g of psyllium with polysaccharides (lOg of oxidized tapioca starch and 0.5 g of gum arabic)

### <Procedure>

Four hundred gram of an aqueous solution containing the components described above (0.5 % by weight of psyllium) was prepared and 10 g of this aqueous solution was subjected to the following process. The solution was adjusted to pH 2 with 2N HCl and admixed with 50 mg of pepsin to effect enzymatic digestion at 37° C for 4 hours. Then 500 mM phosphate buffer, pH 7.2, was added at the final concentration of 20 mM, thereafter the solution was adjusted to pH 7.2 with 2N NaOH. One hundred and fifty mg of pancreatin was added to effect enzymatic digestion at 37° C for 3 hours. The solution was centrifuged at 14,000 x G for 10 minutes, and the volume of the supernatant was measured. The volume after subtracting the volume of the supernatant thus obtained from the volume of the water added (including HCl aqueous solution, phosphate buffer and NaOH aqueous solution) was divided by the amount of the psyllium, whereby obtaining the water-retaining capacity.

The results are shown in Table 6 below.

**Table 6**

| Sample No. | Water-Retaining Capacity (g-water/g-psyllium) | Relative Ratio (%) |
|---|---|---|
| Control | 43.9 | 100 |
| 1 | 30.3 | 69 |
| 2 | 38.6 | 88 |
| 3 | 34.0 | 77 |

As evident from Table 6, approximately 70 % or greater of the control water-retaining capacity was shown to be preserved throughout the above procedure. This Example thus suggests that the composition of the present invention comprising the polysaccharide and psyllium can serve to retain water in a large intestine even after being eaten and digested in a stomach as well as in a small intestine, whereby bringing its excellent intestinal function-controlling effect.

### [Example 7: Psyllium viscosity-reducing ability of the modified starch upon heating]

### <Procedure>

Eighty eight g of ion exchanged water was admixed with 2 g of each of the modified starches shown in Table 7 (Samples No. 1 to 5), which was dissolved with heating and then cooled to below 25° C then 2 g of psyllium was admixed, and the viscosity was determined using Rotor No. 2 at 30 rpm. Subsequently, the solution was heated for 10 minutes in a boiling water bath, then cooled again to below 25° C, followed by homogenization using a food mill, and the viscosity of the respective solution was determined using Rotor No. 2 at 30 rpm. At the same time, the appearances of the hydrate, namely whether the gel mass was formed or not, was observed with respect to each of the samples. As a control, similar procedure was carried out using a sample without addition of the starch. The results are shown in Table 7 below, together with the molecular weight and the viscosity of a 2% aqueous solution of each of the samples.

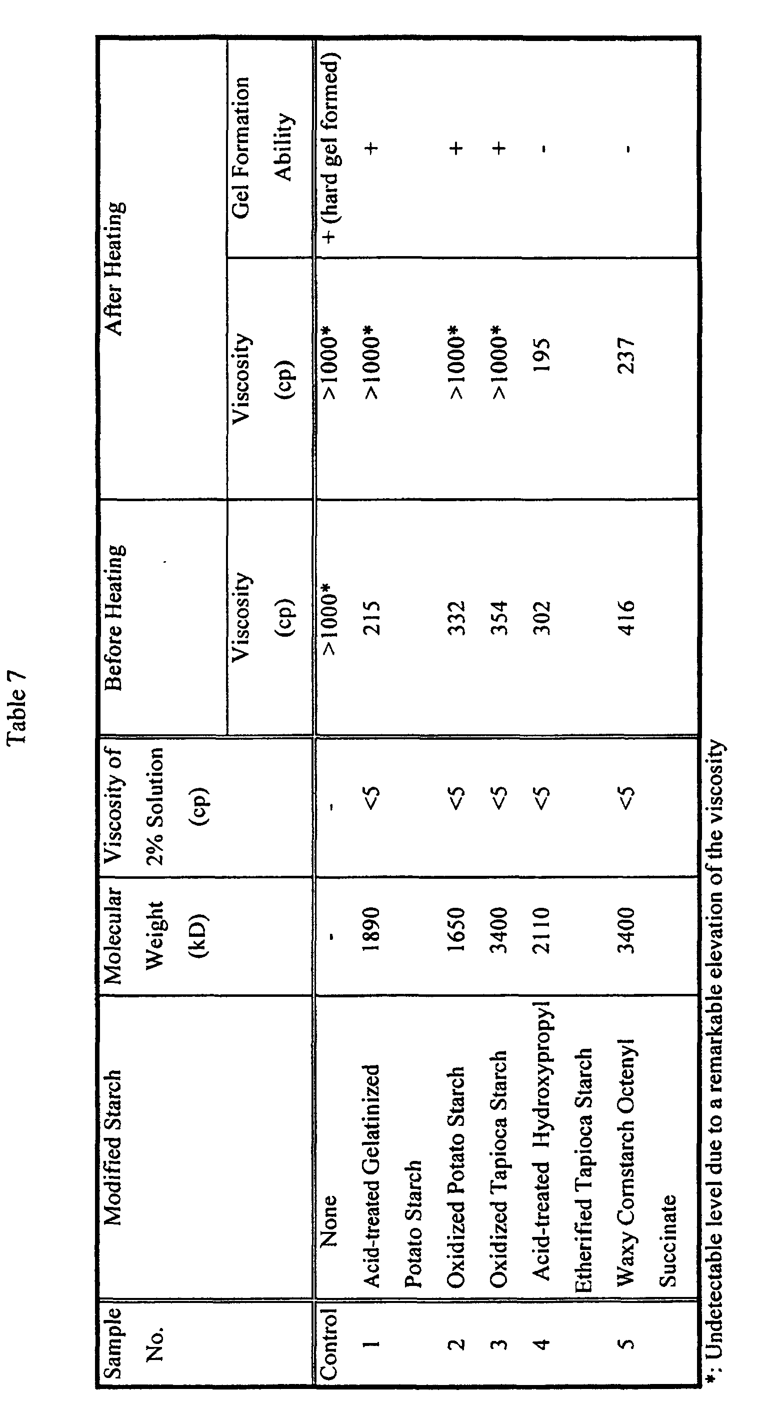

### <Results>

As evident from Table 7, column entitled "Before Heating", the onset of the elevated viscosity resulting from psyllium could be prevented when each of the modified starches (Samples No. 1-5) according to the present invention is included in the hydration system of psyllium in an aqueous solution. Furthermore, after these aqueous solutions were heated, the control sample including psyllium alone showed a remarkable elevation of the viscosity which reaches to greater than 100,000 cp, while the sample No. 4 or 5 which comprises acid-treated hydroxypropyl etherified tapioca starch or waxy cornstarch octenyl succinate respectively did not show any gel formation, and still retained low viscosity. Meanwhile, when the other modified starches were employed (Samples No. 1-3), formation of the gel mass occurred, leading to an extreme elevation of the viscosity around the mass area, therefore, any of these modified starches was concluded to be unsuitable as an ingredient of a liquid food comprising psyllium, which is manufactured through a process comprising heat sterilization. Accordingly, when manufacturing the present liquid food is intended, etherified or esterified starch, particularly, acid-treated hydroxypropyl etherified tapioca starch or waxy cornstarch octenyl succinate may be efficiently added.

### [Example 8: Amount of modified starch to be added]

### <Procedure>

Acid-treated hydroxypropyl etherified tapioca starch (as employed in Example 7) was admixed with ion exchanged water at the final concentrations ranging between 0 to 30%, then dissolved with heating followed by cooling. To each of the solutions, 0.33% of citric acid, 11.85% of fructose-glucose-liquid sugar and 2% of psyllium were added and mixed, thereafter, heated for 10 minutes in a boiling water bath. Then, the fluidity and palatability of each of the samples were evaluated, both after the addition of psyllium and after heating. When the fluidity of the sample including the formed gel was evaluated, the gel was crushed prior to the evaluation.

### <Results>

Without addition of the starch to the 2% psyllium solution, the gel was formed which could not be fractured by crushing due to its viscous/sticky property, thereby the fluidity of the solution could not be attained. When the starch was added at a concentration of 1%, the fluidity could still be sustained after the addition of psyllium, however, the solution became viscous after heating, thus lead to gel formation and to inferior fluidity. Meanwhile, when the starch was added at a concentration of 2% or more, the reduction of viscosity/gel strength could be achieved both before and after the heating, and in the event of the appearance of the gel, such a gel could be easily dispersed and homogenized through crushing it. Hence, the solution having better fluidity could be obtained by the addition of the starch at such concentrations, therefore, the prepared solution will be readily passed into the instrument for packing, and thereby the liquid food of which handling feasibility is superior can be provided. However, when the starch was added at more than or equal to 20%, the palatability may be inferior with gooey and sticky feelings. Therefore, based on the results of evaluation on handling feasibility (i.e., fluidity) and palatability, the suitable range of the modified starch may be preferably between 2 to 20%, and more preferably between 6 to 15%.

### [Example 9: Amount of psyllium to be added]

### <Procedure>

Acid-treated hydroxypropyl etherified tapioca starch (as employed in Example 7) was admixed with ion exchanged water at the final concentrations of 10%, then dissolved with heating followed by cooling. To this solution, 0.33% of citric acid, 11.85% of fructose-glucose-liquid sugar and psyllium at concentrations between 0.5 to 10% were added and mixed, thereafter, heated for 10 minutes in a boiling water bath. Then, the fluidity and palatability of each of the samples were evaluated, both after the addition of psyllium and after heating. When the fluidity of the sample including the formed gel was evaluated, the gel was crushed prior to the evaluation.

### <Results>

When the starch was added at a concentration of 10%, the viscosity elevated enormously leading to unfavorable palatability at a concentration of psyllium of 7.5% or more. When psyllium was added at 3% or less, favorable fluidity was observed without any formation of the gel, even after the heat treatment was conducted. Besides, when psyllium was added at 4 to 5%, although the gel was formed, the suitable fluidity could be resulted through dispersion of the gel by milling it to a homogeneity. Accordingly, the preferable range of psyllium may be 5% or less, based on the results of evaluation on handling feasibility (fluidity) and palatability.

### [Example 10: Water-retaining capacity of the beverage manufactured according to the present invention]

For the purpose of investigating whether the capacity of psyllium to retain water could be preserved in the beverage according to the present invention, the similar experiment was conducted as in the above Example 6 using a biological digestion model assuming the digestion in a stomach and a small intestine.

### <Sample>

Seven hundred and seventy g of ion exchanged water was admixed with 80 g of acid- treated hydroxypropyl etherified tapioca starch (as employed in Example 7), 5 g of gum arabic, and 10 g of dextrin (DE: 2-5), then dissolved with heating followed by cooling to below 25°C. Subsequently, 60.25 g of fructose-glucose-liquid sugar, 32 g of granulated sugar, 20 g of psyllium, 2.75 g of citric acid, and 20 g of grape juice concentrated to one fifth were added to the solution and mixed, thereafter, a flavour was added thereto. The mixture was then sterilized by heating at 90° C for 2 minutes, and the gel formed throughout this procedure was disrupted using a static mixer to prepare a beverage of 1000 g. This beverage was dispensed into a pouch type container made of alminium to be packed 200 g respectively. After sealing the container, heat sterilization was conducted again at 90° C for 10 minutes to manufacture a grape flavoured beverage product comprising psyllium. In this embodiment, gum arabic was added in order to attain a synergistic effect of reducing viscosity by combining with the above described tapioca starch, and to improve the palatability of the product.

### <Measurement of the water-retaining capacity>

To 2.5 g of the beverage manufactured as in the preceding section, 7.5 g of ion exchanged water was added, then thus resulted solution of 10 g was adjusted to pH 2 with 2N HCI and admixed with 50 mg of pepsin to effect enzymatic digestion at 37° C for 4 hours. Subsequently, 500 mM phosphate buffer, pH 7.2, was added at the final concentration of 20 mM, thereafter the solution was adjusted to pH 7.2 with 2N NaOH. One hundred and fifty mg of pancreatin was added to effect enzymatic digestion at 37° C for 3 hours. The mixture was centrifuged at 14,000 x G for 10 minutes, and the volume of the supernatant was measured. The volume after subtracting the volume of the supernatant thus obtained from the volume of the water added (including HCl aqueous solution, phosphate buffer and NaOH aqueous solution) was divided by the amount of the psyllium, whereby obtaining the water-retaining capacity.

The results are shown in Table 8 below.

**Table 8**

| Sample | Water-Retaining Capacity (g-water/g-psyllium) | Relative Ratio (%) |
|---|---|---|
| Control | 45.5 | 100 |
| Grape Flavored Beverage | 37.5 | 82 |

As evident from Table 8, 80 % or greater of the control water-retaining capacity was shown to be preserved with the present beverage comprising psyllium, throughout the above procedure. This result suggests that the liquid food product of the present invention comprising psyllium can serve to retain water in a large intestine even after being eaten and digested in a stomach as well as in a small intestine.

### [Example 11: Psyllium viscosity-reducing ability of granulated polysaccharide]

### <Procedure>

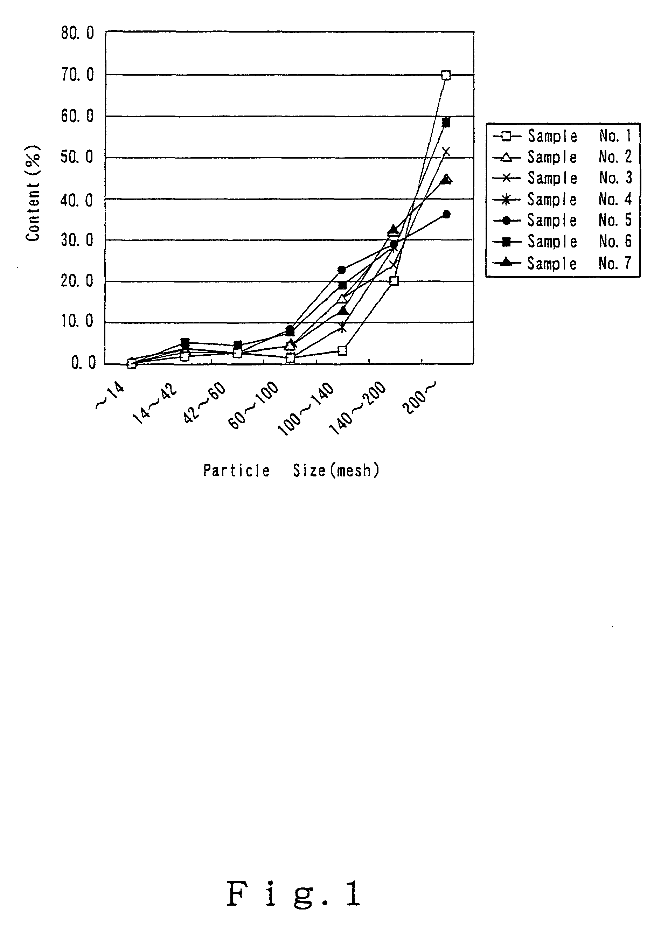

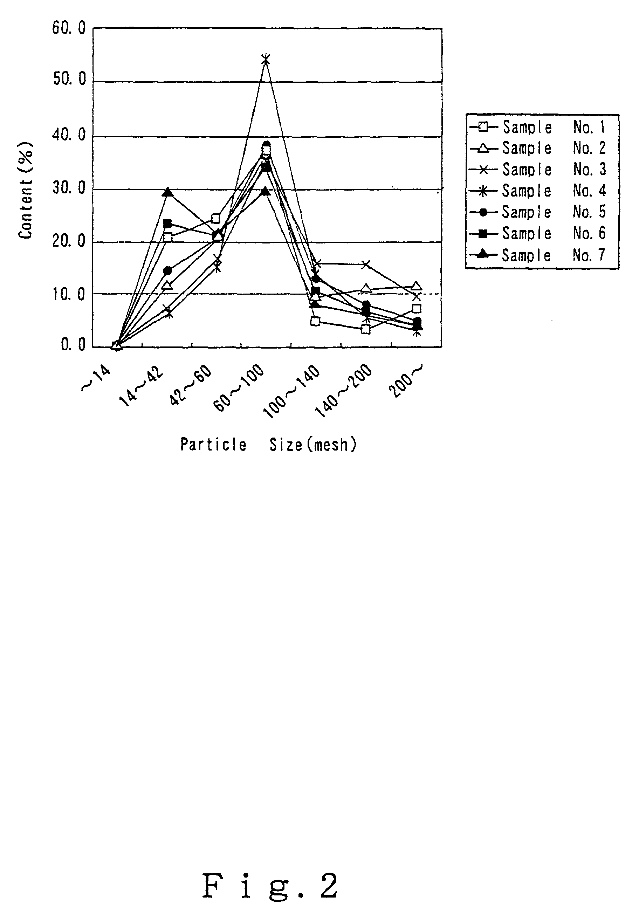

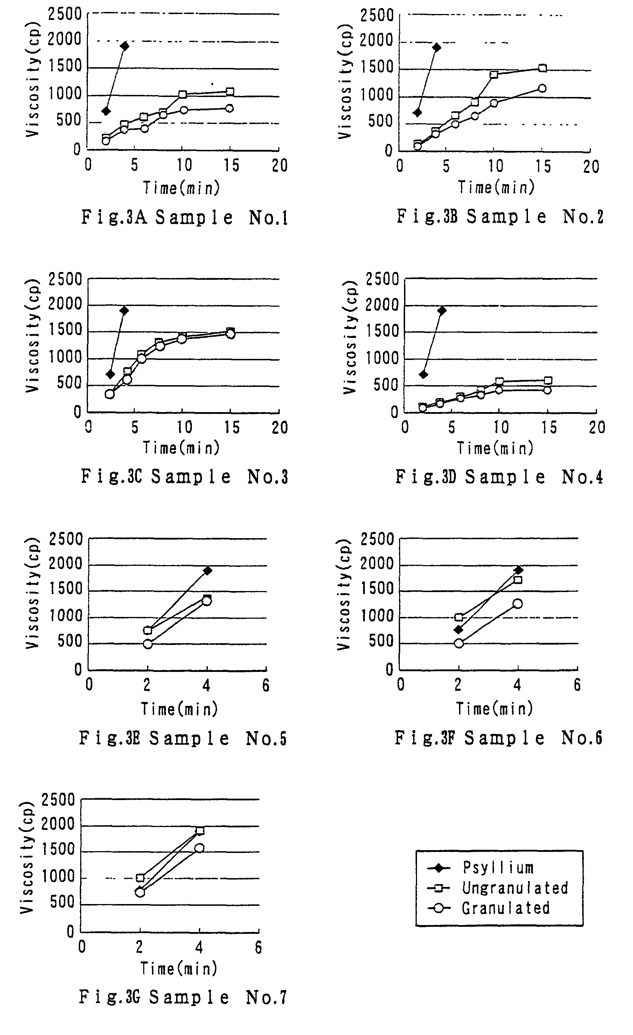

To 212.3 g of water, the previously mixed powder of both of 4.4 g of psyllium and 3.3 g of each of the polysaccharides shown in Table 9 (Samples No. 1 to 7) were admixed, which was dissolved, and the time dependent alteration of the viscosity was determined. The polysaccharides employed were both of those granulated, and ungranulated. The granulated polysaccharides were prepared by the method of fluidized bed granulation. The particle size distribution of these granulated polysaccharides is shown in Table 11 and Fig. 2, while that of ungranulated polysaccharides is shown in Table 10 and Fig. 1. Table 12 and Fig.3 illustrate the results of determined viscosity of the aqueous solution comprising each of the polysaccharides and psyllium.

**Table 9**

| Sample No. | Source and Modification Method | Molecular Weight (kD) | Viscosity of 2% Aqueous Solution (cp) |
|---|---|---|---|
| 1 | Acid-treated Gelatinized Potato Starch | 1890 | <5 |
| 2 | Waxy Cornstarch Octenyl Succinate | 3400 | <5 |
| 3 | Partially Decomposed Guar Gum | 22.5 | <5 |
| 4 | Gum Arabic | 1780 | <5 |
| 5 | Dextrin(DE 2-5) Cornstarch | - | <5 |
| 6 | Blanched Dextrin(DE 8.0±1.0) Cornstarch | - | <5 |
| 7 | Dextrin (DE16-21) Corn Starch | - | <5 |

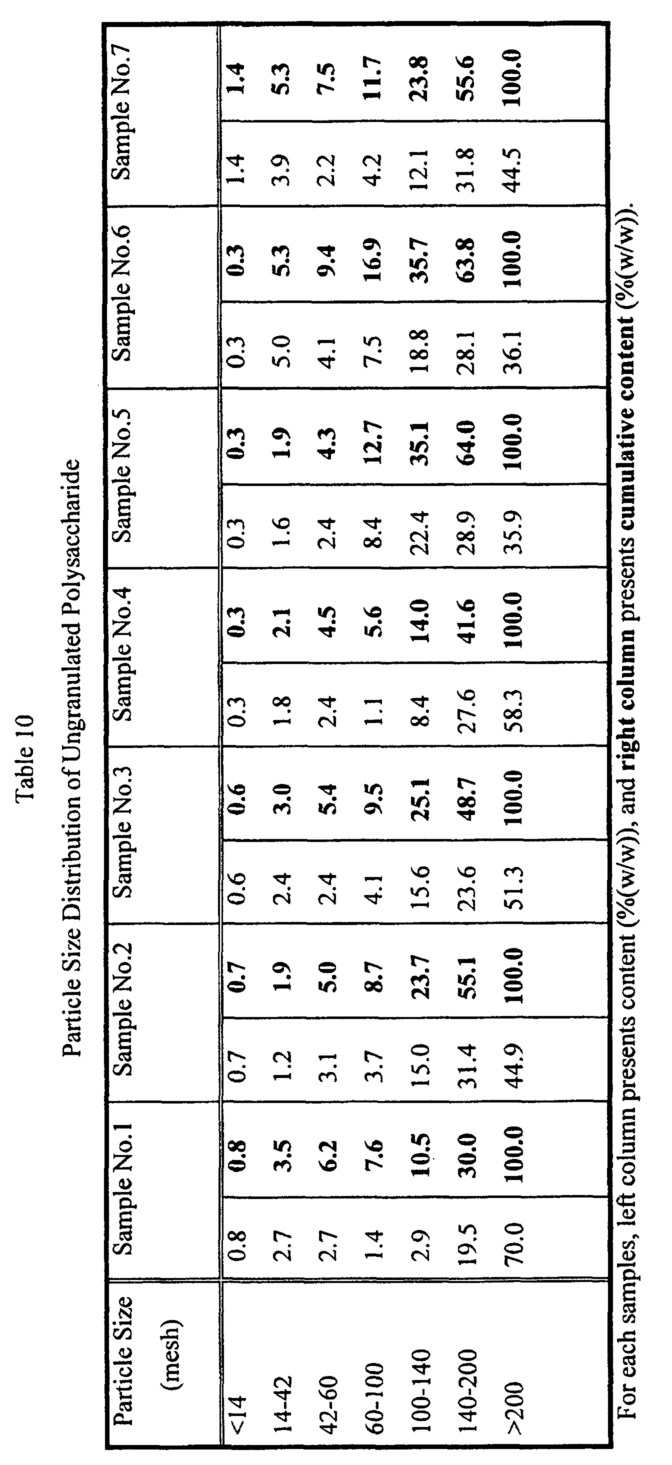

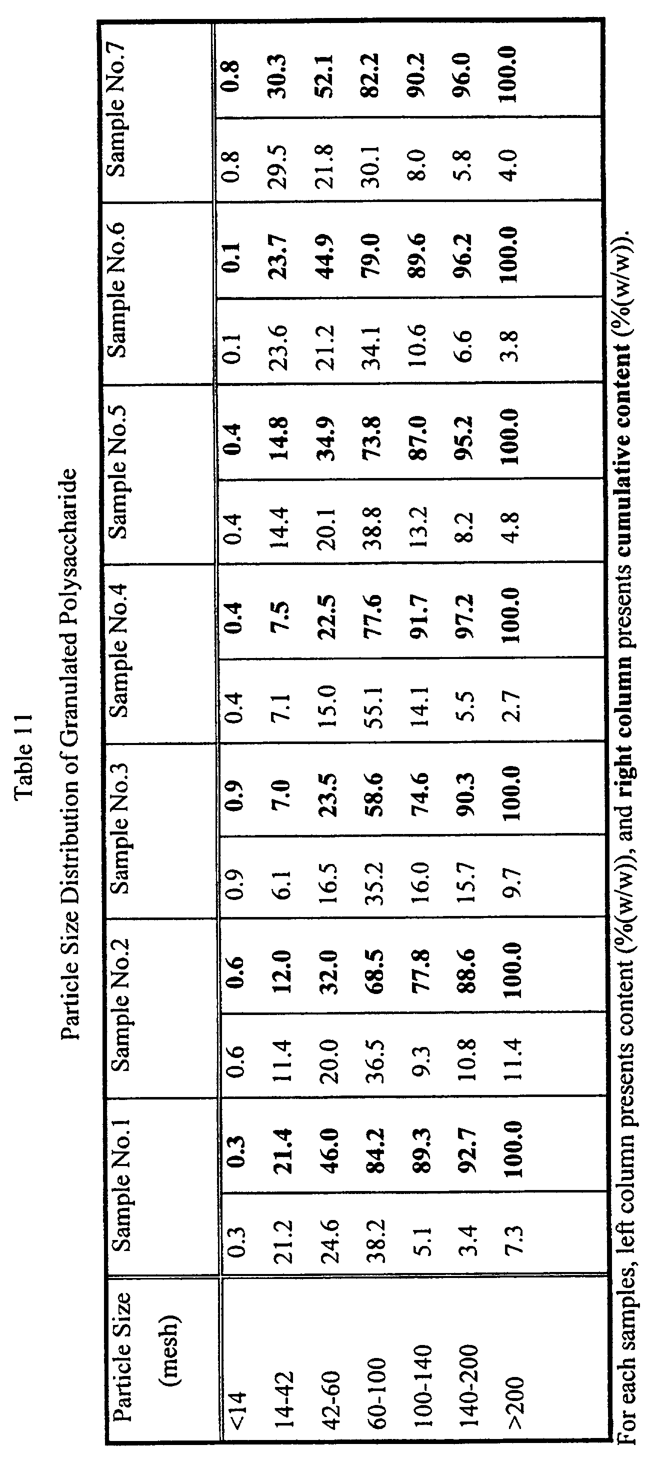

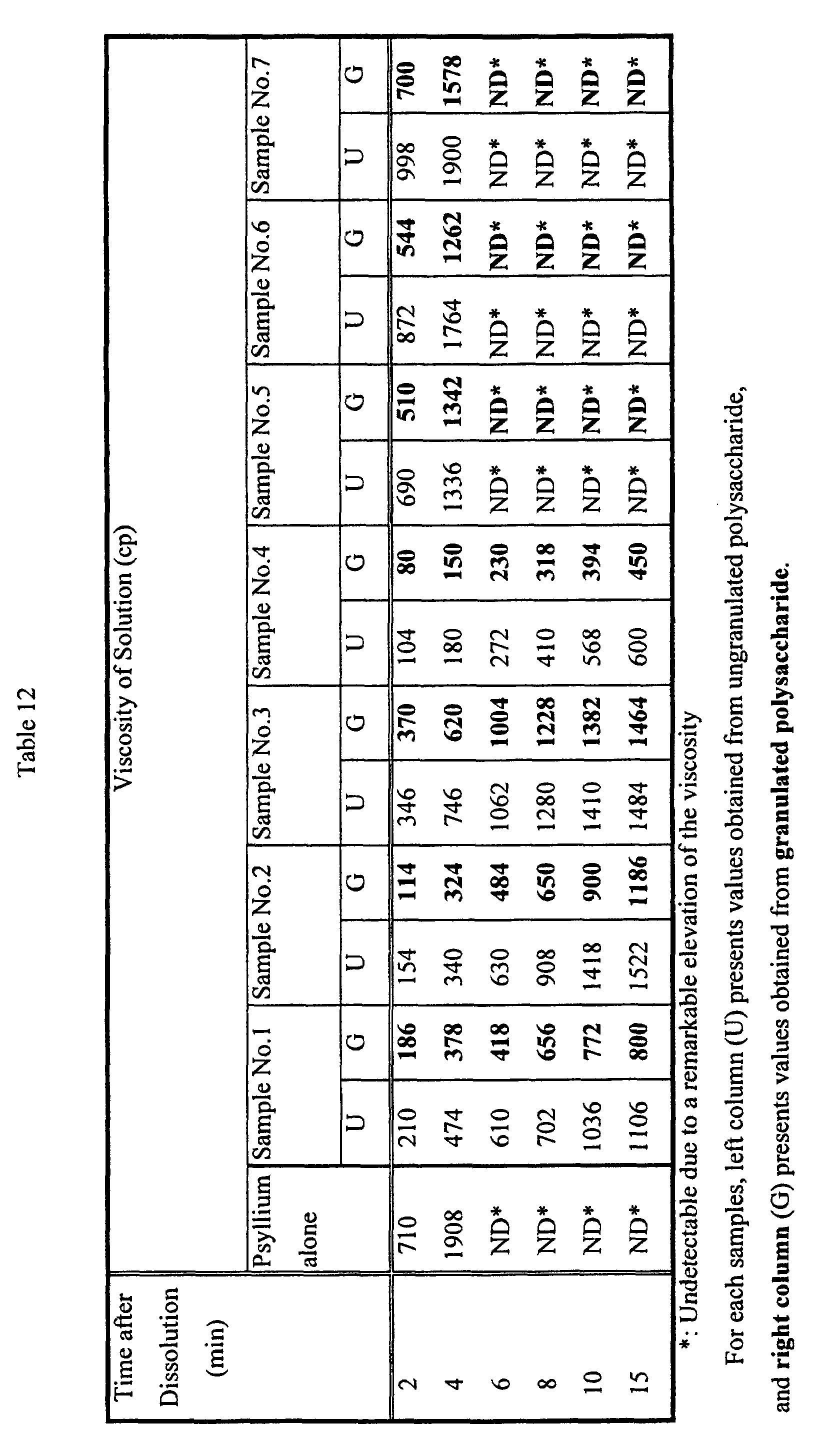

### <Results>

As shown in Table 12 and Fig. 3, the onset of the elevated viscosity resulting from psyllium could be prolonged when each of the polysaccharides (Samples No. 1-7) were granulated. Further, the prominent effect to prolong the onset of the elevated viscosity could be observed when Sample No. 1 (acid-treated gelatinized potato starch), Sample No. 2 (waxy cornstarch octenyl succinate), or Sample No. 4 (gum arabic), was employed as the polysaccharide. Sample No. 6, i.e., blanched dextrin (DE: 8.0± 1.0) followed to exhibit the some extent of the effect, besides, Sample No. 3 (partially decomposed guar gum), and Samples No. 5 and 7, i.e., dextrin (respective DE: 2-5 and 16-21) also exhibited slight effects to prolong the onset of the elevated viscosity.

### [Example 12: Effect to prolong the onset of elevated viscosity by each fraction of granulated polysaccharides having specified particle size]

### <Procedure>

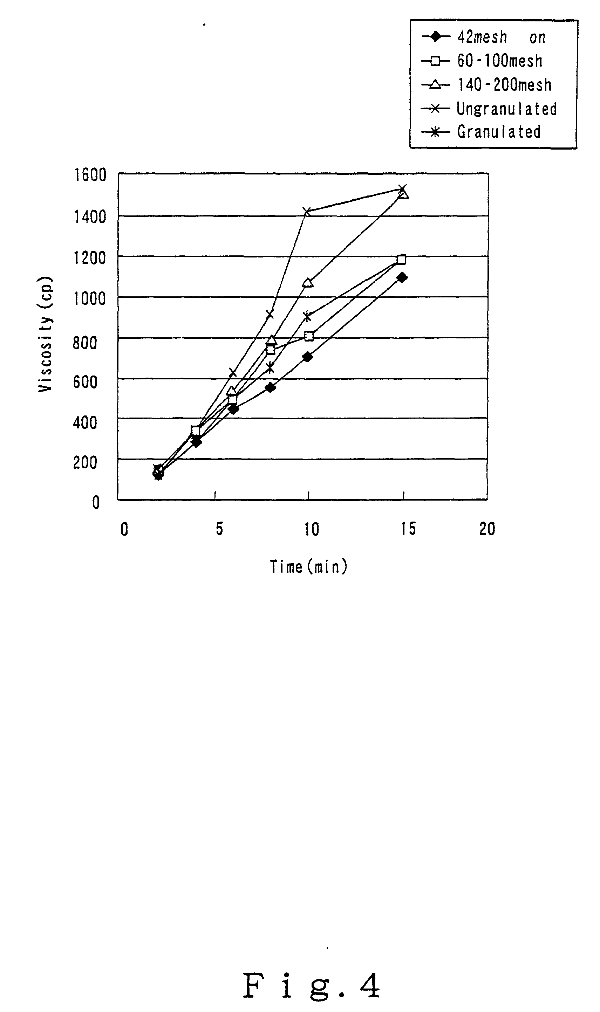

Sample No. 2 in the above Example 11 (waxy cornstarch octenyl succinate) was granulated followed by fractionation into: 42 mesh on, 60-100 mesh, and 140-200 mesh, and these fractions were subjected to the analysis as in the above Example 11 on the time dependent alteration of the viscosity of the aqueous solutions. The results are shown in Table 13 and Fig. 4.

**Table 13**

| Time after Dissolution (min) | Sample No.2 (Waxy Cornstarch Octenyl Succinate) Viscosity of Solution (cp) | | | | |
|---|---|---|---|---|---|
| | 42 mesh on | 60-100 mesh | 140-200 mesh | Ungranulated | Granulated |
| 2 | 110 | 120 | 130 | 154 | 114 |
| 4 | 282 | 286 | 312 | 340 | 324 |
| 6 | 440 | 506 | 534 | 630 | 484 |
| 8 | 552 | 734 | 778 | 908 | 650 |
| 10 | 704 | 802 | 1060 | 1418 | 900 |
| 15 | 1090 | 1188 | 1482 | 1522 | 1186 |

### <Results>

As indicated from Table 13 and Fig. 4, the granulated polysaccharide having the smaller (finer) particle size may tend to result in the similar time-dependent alteration of the viscosity to the ungranulated one, and may have a lower viscosity-reducing effect. Meanwhile, the granulated polysaccharide having the larger (coarser) particle size may tend to have a higher viscosity-reducing effect.

### [Example 13: Preparation of powdered juice mix]

### <Granulated powder A>

First, 700 g of psyllium, 200 g of granulated sugar and 100 g of organic acid were mixed together, then granulated using a fluidized bed granulator to prepare granulated powder A.

### <Granulated powder B>

Essentially similar to the above procedure, 700 g of dextrin (DE: 2-5), 200 g of acid-treated gelatinized potato starch, 50 g of gum arabic and 50 g of organic acid were mixed, then granulated using a fluidized bed granulator to prepare granulated powder B.

Next, 925 g of 1:1 mixture of the granulated powder A and B was admixed with 60 g of granulated sugar, 5 g of a concentrated sweetener, 8 g of an acidulant and 2 g of a flavour to prepare 1000 g of powdered juice mix comprising psyllium. Then, 10 g of the powder was put into a package made of alminium, and the package was sealed to manufacture the powdered juice mix product comprising psyllium.

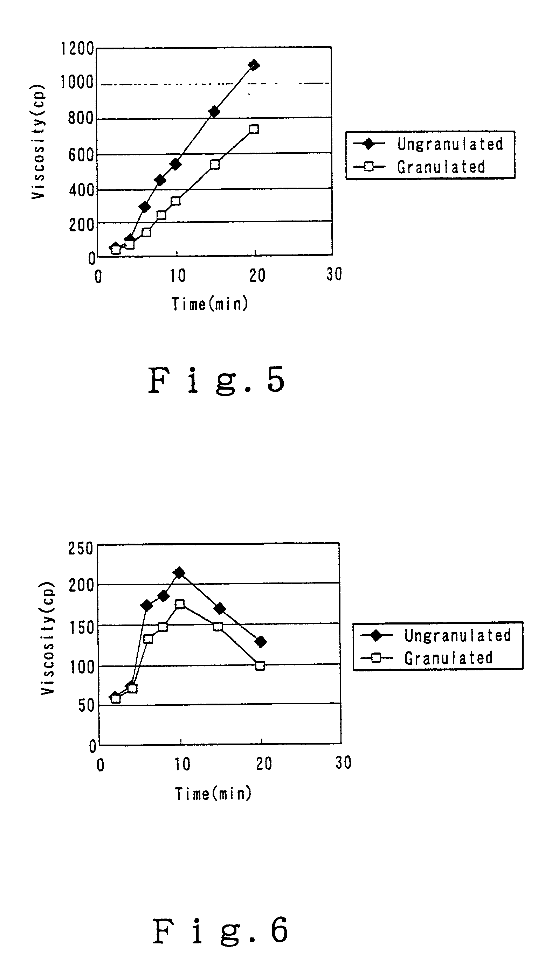

Ten gram of the powdered juice mix was dissolved in 180 ml of water, subsequently, the time dependent alteration of the viscosity of thus prepared solution was determined. The results of the time dependent alteration of viscosity is shown in Fig. 5, and the particle size distribution of the granulated powder A and B is illustrated in Table 14. As a control in Fig. 5, ungranulated sample was employed comprising the same constituents as in the granulated powder B.

**Table 14**

| Particle Size (mesh) | Powder A Granulated | | Powder B Granulated | |
|---|---|---|---|---|
| | Content (%(w/w)) | Cumulative content (%(w/w)) | Content (%(w/w)) | Cumulative Content (%(w/w)) |
| <14 | 0.0 | 0.0 | 0.6 | 0.6 |
| 14-42 | 1.2 | 1.2 | 19.0 | 19.6 |
| 42-60 | 17.4 | 18.5 | 27.2 | 46.8 |
| 60-100 | 52.8 | 71.3 | 35.3 | 82.0 |
| 100-140 | 20.8 | 92.1 | 11.1 | 93.1 |
| 140-200 | 6.2 | 98.3 | 4.5 | 97.6 |
| >200 | 1.7 | 100.0 | 2.4 | 100.0 |

### [Example 14: Preparation of powdered instant soup mix]

### <Granulated powder A>

First, 385 g of powdered sweet corn, 365 g of milk powder, 125 g of granulated sugar, 62 g of common salt, 31 g of vegetable extract, 16 g of seasonings such as amino acids, 13 g of protein hydrolysates and 3 g of a flavour were mixed together, then granulated using a fluidized bed granulator to prepare granulated powder A.

### <Granulated powder B>

Essentially similar to the above procedure, acid-treated was granulated using a fluidized bed granulator to prepare granulated powder B.

Next, 16 g of granulated powder A, 12 g of granulated powder B and 2 g of psyllium were mixed to manufacture the powdered instant soup mix product comprising psyllium for one feed.

Thirty g of the powdered instant soup mix was dissolved in 130 ml of hot water, subsequently, the time dependent alteration of the viscosity of thus prepared solution was determined. The results of the time dependent alteration of viscosity is shown in Fig. 6, and the particle size distribution of the granulated powder B is illustrated in Table 15. As a control in Fig. 6, ungranulated sample was employed comprising the same constituents as in the granulated powder B.

**Table 15**

| Particle Size (mesh) | Powder B Granulated | |
|---|---|---|
| | Content (%(w/w)) | Cumulative Content (%(w/w)) |
| <14 | 0.1 | 0.1 |
| 14-42 | 34.3 | 34.3 |
| 42-60 | 23.0 | 57.3 |
| 60-100 | 22.9 | 80.2 |
| 100-140 | 8.4 | 88.6 |
| 140-200 | 6.4 | 95.0 |
| >200 | 5.0 | 100.0 |

## Claims

1. Use of a polysaccharide for reducing the viscosity resulting from psyllium, the polysaccharide having a molecular weight of 20,000 or more and a viscosity in 2% by weight aqueous solution of 9.0 cp or less (determined using a type B viscometer with Rotor No. 1, at 60 rpm and 25° C).

2. Use according to claim 1 wherein the polysaccharide is granulated.

3. Use according to claim 1 or claim 2, wherein the polysaccharide is selected from modified starch, gum arabic, arabinogalactan, partially decomposed guar gum, pullulan, dietary fiber and combinations thereof.

4. Use according to claim 3, wherein the modified starch has been subjected to one or more of oxidation, etherification, esterification and gelatinization.

5. Use according to claim 3, wherein the modified starch is selected from oxidized tapioca starch, oxidized potato starch, acid-treated gelatinized potato starch, waxy cornstarch octenyl succinate, acid-treated hydroxypropyl etherified tapioca starch and combinations thereof.

6. A composition suitable for use as a food additive, the composition comprising psyllium and a polysaccharide having a molecular weight of 20,000 or more and a viscosity in 2% by weight aqueous solution of 9.0 cp or less (determined using a type B viscometer with Rotor No. 1, at 60 rpm and 25°C).

7. A food comprising psyllium and a polysaccharide having a molecular weight of 20,000 or more and a viscosity in 2% by weight aqueous solution of 9.0 cp or less (determined using a type B viscometer with Rotor No. 1, at 60 rpm and 25°C).

8. A liquid food comprising psyllium and a polysaccharide having a molecular weight of 20,000 or more and a viscosity in 2% by weight aqueous solution of 9.0 cp or less (determined using a type B viscometer with Rotor No. 1, at 60 rpm and 25°C), the polysaccharide being at least one modified starch selected from etherified starch, esterified starch and combinations thereof.

9. The liquid food according to claim 8, wherein the modified starch is selected from acid-treated hydroxypropyl etherified tapioca starch, waxy cornstarch octenyl succinate and combinations thereof.

10. A method for manufacturing a liquid food comprising the steps of:
a) preparing an aqueous solution comprising psyllium and at least one modified starch selected from etherified starch, esterified starch and combinations thereof, the modified starch having a molecular weight of 20,000 or more and a viscosity in 2% by weight aqueous solution of 9.0 cp or less (determined using a type B viscometer with Rotor No. 1, at 60 rpm and 25°C);
(b) packing the solution into a container and sealing the container; and
(c) sterilizing the solution by heating prior to, during or following packing step (b).

11. A method according to claim 10, wherein psyllium is added to the aqueous solution of modified starch in the step (a).

12. A method according to claim 10 or claim 11, wherein the modified starch is selected from acid-treated hydroxypropyl etherified tapioca starch, waxy cornstarch octenyl succinate and combinations thereof.

13. A powdered food suitable for use in preparing a liquid food, comprising psyllium and a polysaccharide having a molecular weight of 20,000 or more and a viscosity in 2% by weight aqueous solution of 9.0 cp or less (determined using a type B viscometer with Rotor No. 1, at 60 rpm and 25°C) wherein the polysaccharide is granulated.

14. A powdered food according to claim 13, wherein the polysaccharide comprises 70% by weight or more of particles unable to pass through a 140 mesh sieve.

15. Use of a polysaccharide for the manufacture of a liquid food comprising psyllium, wherein the polysaccharide is at least one modified starch selected from etherified starch, esterified starch and combinations thereof and has a molecular weight of 20,000 or more and a viscosity in 2% by weight aqueous solution of 9.0 cp or less (determined using a type B viscometer with Rotor No. 1, at 60 rpm and 25°C).

## Patentansprüche

1. Verwendung eines Polysaccharids zur Verringerung der durch Psyllium verursachten Viskosität, wobei das Polysaccharid ein Molekulargewicht von 20.000 oder mehr und eine Viskosität in 2 Gew.% wäßriger Lösung von 9,0 cp oder weniger (bestimmt unter Verwendung eines Viskosimeters vom Typ B mit Rotor Nr. 1 bei 60 Upm und 25 °C) aufweist.

2. Verwendung nach Anspruch 1, wobei das Polysaccharid granuliert vorliegt.

3. Verwendung nach Anspruch 1 oder Anspruch 2, wobei das Polysaccharid ausgewählt ist aus modifizierter Stärke, Gummi arabicum, Arabinogalactan, partiell abgebautem Guargummi, Pullulan, Ballaststoff und Kombinationen davon.

4. Verwendung nach Anspruch 3, wobei die modifizierte Stärke einem oder mehrerer Verfahren der Oxidation, Veretherung, Veresterung und Gelatinisierung unterworfen worden ist.

5. Verwendung nach Anspruch 3, wobei die modifizierte Stärke ausgewählt ist aus oxidierter Tapiokastärke, oxidierter Kartoffelstärke, säurebehandelter gelatinisierter Kartoffelstärke, Octenylsuccinat von wachsartiger Maisstärke, säurebehandelter Hydroxypropyl-veretherter Tapiokastärke und Kombinationen davon.

6. Zusammensetzung, die zur Verwendung als Nahrungsmittelzusatzstoff geeignet ist, wobei die Zusammensetzung Psyllium und ein Polysaccharid umfaßt, welches ein Molekulargewicht von 20.000 oder mehr und eine Viskosität in 2 Gew.% wäßriger Lösung von 9,0 cp oder weniger (bestimmt unter Verwendung eines Viskosimeters vom Typ B mit Rotor Nr. 1 bei 60 Upm und 25 °C) aufweist.

7. Nahrungsmittel, das Psyllium und ein Polysaccharid umfaßt, welches ein Molekulargewicht von 20.000 oder mehr und eine Viskosität in 2 Gew.% wäßriger Lösung von 9,0 cp oder weniger (bestimmt unter Verwendung eines Viskosimeters vom Typ B mit Rotor Nr. 1 bei 60 Upm und 25 °C) aufweist.

8. Flüssiges Nahrungsmittel, das Psyllium und ein Polysaccharid umfaßt, welches ein Molekulargewicht von 20.000 oder mehr und eine Viskosität in 2 Gew.% wäßriger Lösung von 9,0 cp oder weniger (bestimmt unter Verwendung eines Viskosimeters vom Typ B mit Rotor Nr. 1 bei 60 Upm und 25 °C) aufweist, wobei das Polysaccharid wenigstens eine modifizierte Stärke ausgewählt aus veretherter Stärke, veresterter Stärke und Kombinationen davon ist.

9. Flüssiges Nahrungsmittel nach Anspruch 8, wobei die modifizierte Stärke ausgewählt ist aus säurebehandelter Hydroxypropyl-veretherter Tapiokastärke, Octenylsuccinat von wachsartiger Maisstärke und Kombinationen davon.

10. Verfahren zur Herstellung eines flüssigen Nahrungsmittels, welches die Schritte umfaßt:
(a) Anfertigung einer wäßrigen Lösung, die Psyllium und wenigstens eine modifizierte Stärke ausgewählt aus veretherter Stärke, veresterter Stärke und Kombinationen davon umfaßt, wobei die modifizierte Stärke ein Molekulargewicht von 20.000 oder mehr und eine Viskosität in 2 Gew.% wäßriger Lösung von 9,0 cp oder weniger (bestimmt unter Verwendung eines Viskosimeters vom Typ B mit Rotor Nr. 1 bei 60 Upm und 25 °C) aufweist;
(b) Verpackung der Lösung in einen Behälter und Verschluß des Behälters; und
(c) Sterilisieren der Lösung durch Erhitzung vor, während oder nach dem Verpackungsschritt (b).

11. Verfahren nach Anspruch 10, wobei Psyllium der wäßrigen Lösung modifizierter Stärke im Schritt (a) zugegeben wird.

12. Verfahren nach Anspruch 10 oder Anspruch 11, wobei die modifizierte Stärke ausgewählt ist aus säurebehandelter Hydroxypropyl-veretherter Tapiokastärke, Octenylsuccinat von wachsartiger Maisstärke und Kombinationen davon.

13. Pulverförmiges Nahrungsmittel, das zur Verwendung bei der Herstellung eines flüssigen Nahrungsmittels geeignet ist, welches Psyllium und ein Polysaccharid umfaßt, das ein Molekulargewicht von 20.000 oder mehr und eine Viskosität in 2 Gew.% wäßriger Lösung von 9,0 cp oder weniger (bestimmt unter Verwendung eines Viskosimeters vom Typ B mit Rotor Nr. 1 bei 60 Upm und 25 °C) aufweist, wobei das Polysaccharid granuliert ist.

14. Pulverförmiges Nahrungsmittel nach Anspruch 13, wobei das Polysaccharid 70 Gew.% oder mehr Teilchen enthält, die ein Sieb einer Maschenweite von 140 nicht passieren können.

15. Verwendung eines Polysaccharids zur Herstellung eines flüssigen Nahrungsmittels, das Psyllium enthält, wobei das Polysaccharid wenigstens eine modifizierte Stärke ausgewählt aus veretherter Stärke, veresterter Stärke und Kombinationen davon ist und ein Molekulargewicht von 20.000 oder mehr und eine Viskosität in 2 Gew.% wäßriger Lösung von 9,0 cp oder weniger (bestimmt unter Verwendung eines Viskosimeters vom Typ B mit Rotor Nr. 1 bei 60 Upm und 25 °C) aufweist.

## Revendications

1. Utilisation d'un polysaccharide pour réduire la viscosité induite par le psyllium, le polysaccharide ayant un poids moléculaire de 20000 ou plus et une viscosité en solution aqueuse à 2% en poids de 9,0 cP ou moins (que l'on détermine en utilisant un viscosimètre de type B avec un rotor n° 1, à 60 tpm et à 25°C).

2. Utilisation selon la revendication 1, dans laquelle le polysaccharide est granulé.

3. Utilisation selon la revendication 1 ou la revendication 2, dans laquelle on choisit le polysaccharide parmi l'amidon modifié, la gomme arabique, l'arabinogalactane, la gomme de guar partiellement décomposée, le pullulan, une fibre alimentaire et leurs combinaisons.

4. Utilisation selon la revendication 3, dans laquelle on a soumis l'amidon modifié à au moins un traitement parmi une oxydation, une éthérification, une estérification et une gélatinisation.

5. Utilisation selon la revendication 3, dans laquelle on choisit l'amidon modifié parmi l'amidon de tapioca oxydé, l'amidon de pomme de terre oxydé, l'amidon de pomme de terre gélatinisé traité par un acide, l'octényl succinate d'amidon de maïs cireux, l'amidon de tapioca éthérifié par hydroxypropyle et traité par un acide et leurs combinaisons.

6. Composition appropriée pour une utilisation comme additif alimentaire, la composition comprenant du psyllium et un polysaccharide ayant un poids moléculaire de 20000 ou plus et une viscosité en solution aqueuse à 2% en poids de 9,0 cP ou moins (que l'on détermine en utilisant un viscosimètre de type B avec un rotor n° 1, à 60 tpm et à 25°C).

7. Aliment comprenant du psyllium et un polysaccharide ayant un poids moléculaire de 20000 ou plus et une viscosité en solution aqueuse à 2% en poids de 9,0 cP ou moins (que l'on détermine en utilisant un viscosimètre de type B avec un rotor n° 1, à 60 tpm et à 25°C).

8. Aliment liquide comprenant du psyllium et un polysaccharide ayant un poids moléculaire de 20000 ou plus et une viscosité en solution aqueuse à 2% en poids de 9,0 cP ou moins (que l'on détermine en utilisant un viscosimètre de type B avec un rotor n° 1, à 60 tpm et à 25°C), le polysaccharide étant au moins un amidon modifié choisi parmi un amidon éthérifié, un amidon estérifié et leurs combinaisons.

9. Aliment liquide selon la revendication 8, dans lequel on choisit l'amidon modifié parmi l'amidon de tapioca éthérifié par hydroxypropyle et traité par un acide, l'octényl succinate d'amidon de maïs cireux et leurs combinaisons.

10. Procédé pour la fabrication d'un aliment liquide comprenant les étapes de :
(a) préparation d'une solution aqueuse comprenant du psyllium et au moins un amidon modifié choisi parmi l'amidon éthérifié, l'amidon estérifié et leurs combinaisons, l'amidon modifié ayant un poids moléculaire de 20000 ou plus et une viscosité en solution aqueuse à 2% en poids de 9,0 cP ou moins (que l'on détermine en utilisant un viscosimètre de type B avec un rotor n° 1, à 60 tpm et à 25°C) ;
(b) conditionnement de la solution dans un conteneur et scellement du conteneur ;
et
(c) stérilisation de la solution par chauffage avant, pendant ou après l'étape de conditionnement (b).

11. Procédé selon la revendication 10, dans lequel on ajoute du psyllium à la solution aqueuse d'amidon modifié dans l'étape (a).

12. Procédé selon la revendication 10 ou la revendication 11, dans lequel on choisit l'amidon modifié parmi l'amidon de tapioca éthérifié par hydroxypropyle et traité par un acide, l'octényl succinate d'amidon de maïs cireux et leurs combinaisons.

13. Produit alimentaire en poudre approprié pour une utilisation dans la préparation d'un aliment liquide, comprenant du psyllium et un polysaccharide ayant un poids moléculaire de 20000 ou plus et une viscosité en solution aqueuse à 2% de 9,0 cP ou moins (que l'on détermine en utilisant un viscosimètre de type B avec un rotor n° 1, à 60 tpm et à 25°C) dans lequel le polysaccharide est granulé.

14. Aliment en poudre selon la revendication 13, dans lequel le polysaccharide comprend 70% en poids ou plus de particules incapables de passer à travers un tamis de mailles de 140.

15. Utilisation d'un polysaccharide pour la fabrication d'un produit alimentaire liquide comprenant du psyllium, dans laquelle le polysaccharide est au moins un amidon modifié choisi parmi l'amidon éthérifié, l'amidon estérifié et leurs combinaisons et a un poids moléculaire de 20000 ou plus et une viscosité en solution aqueuse à 2% en poids de 9,0 cP ou moins (que l'on détermine en utilisant un viscosimètre de type B avec un rotor n° 1, à 60 tpm et à 25°C).
